**Europäisches Patentamt**

**European Patent Office**

**Office européen des brevets**

(19)

(11) Veröffentlichungsnummer: **0 144 010**
A2

# (12) EUROPÄISCHE PATENTANMELDUNG

(21) Anmeldenummer: **84113602.1**

(22) Anmeldetag: **10.11.84**

(51) Int. Cl.⁴: **B 62 K 3/02**

(30) Priorität: **28.11.83 AU 2578/83**

(43) Veröffentlichungstag der Anmeldung:
**12.06.85 Patentblatt 85/24**

(84) Benannte Vertragsstaaten:
**AT BE CH DE FR GB IT LI NL**

(71) Anmelder: **Newpro, Regina Baumann**
**Rathausufer 23**
**D-4000 Düsseldorf 1(DE)**

(72) Erfinder: **O'Reilly, Barry**
**Lot 1 Happiness Lane**
**Mundaring 6073(AU)**

(74) Vertreter: **Palgen, Peter, Dr.**
**Patentanwälte Kuborn & Dr. Palgen Mulvanystrasse 2**
**D-4000 Düsseldorf(DE)**

(54) Fahrrad.

(57) Das Fahrrad (100) besitzt einen Rahmen (10) in Strebbauweise und Räder (22, 47) normaler Größe, wobei jedoch das Vorderrad (47) etwa kleiner als das Hinterrad (22) ist. Das von der Abstützung des dicht oberhalb des Hinterrades (22) angeordneten Sitzes (20) zum Tretlager (80) führende gerade Hauptrahmenrohr (1) verläuft in einem Winkel von 32 ± 5° zur Horizontalen schräg nach vorn und unten. Der Sitz (20) weist eine im wesentlichen aufrechte Rückenlehne (36) auf. Die Sitzhaltung ist dementsprechend aufrecht, und es verlaufen die Beine im wesentlichen schräg nach vorn und unten. Die Tretkräfte werden durch die Rückenlehne (36) abgefangen.

EP 0 144 010 A2

./...

Fig. 1

0144010

Newpro, Regina BAUMANN
in 4ooo Düsseldorf 1.


Die Erfindung bezieht sich auf ein Fahrrad der dem Oberbegriff des Anspruchs 1 entsprechenden Art.

Ein derartiges Fahrrad entspricht der klassischen Konstruktion, die den sogenannten Fünfeckrahmen aufweist. Solche Fahrräder sind auch mit kleinerem Vorderrad bekannt, in neuerer Zeit insbesondere als Bahnrennräder.

Der Fünfeckrahmen (siehe das Buch von Rauck/Volke/ Paturi "Mit dem Rad durch zwei Jahrhunderte", zweite Auflage (1979), Seiten 113 bis 117) beruht auf dem Fachwerkprinzip und besteht aus geraden Rohrabschnitten, die an den Knotenstellen zusammengefügt sind, überwiegend durch Muffen. Das Fünfeck umfaßt ein vorderes Viereck, welches aus einem vom Sitz zum Tretlager leicht schräg nach vorn führenden, aber recht steil stehenden Rahmenrohr, einem vom Sitz nach vorn führenden und einem vom Tretlager schräg nach oben führenden Rahmenrohr sowie dem durch einen Rohrabschnitt gebildeten Gabellager besteht, an das die nach vorn führenden Rahmenrohre mit ihren vorderen Enden angesetzt sind. Die fünfte Ecke wird durch das Hinterradlager gebildet, welches durch vom Tretlager nach hinten und vom Sitz schräg nach unten führende Streben gehalten ist.

Da das Tretlager sich nur wenig vor dem Sitz befindet und das zwischen Sitz und Tretlager verlaufende Rahmenrohr mit einem Winkel von etwa 7o° zur Vertikalen ziemlich steil steht, erstreckt sich das Bein beim Treten praktisch nach unten, insbesondere wenn die jeweilige Tretkurbel unten steht und das Bein praktisch gestreckt ist. Damit die Tretkurbel unter keinen Umständen beim Fahren eine Bodenberührung erfährt, was einen Sturz herbeiführen kann, muß sie in einer gewissen Höhe über dem Boden angebracht sein.

Daraus und aus den anatomischen Gegebenheiten des Fahrers ergibt sich eine gewisse Mindesthöhe des Sitzes, die in bekannter Weise an die Beinlänge angepaßt werden kann, in jedem Fall aber erheblich ist. Bei einem normalen Fahrrad ist es bei für optimale Antriebsverhältnisse richtiger Einstellung des Sitzes für einen auf dem Sattel sitzenden Fahrer nicht oder nur mit Anstrengung und gerade mit dem Zehenspitzen möglich, mit beiden Beinen gleichzeitig den Boden zu erreichen. Beim Übergang vom Stand zur Fahrt ergeben sich Übergangszustände, in denen balanciert werden muß. Diese Tatsache führt dazu, daß ein Anfänger nur wackelig anfahren kann, zunächst ein starkes Unsicherheitsgefühl hat und überhaupt das Radfahren gelernt werden muß.

Ein weiterer Problempunkt beim klassischen Fahrrad ist die unnatürliche Haltung, die der Fahrer einnimmt und die in vergleichbarer Weise in keiner sonstigen Lebenssituation vorkommt. Der Fahrer sitzt weitgehend eingeklappt auf dem Sattel und tritt im wesentlichen nach unten, wobei die Gegenkraft durch das Gewicht des Fahrers aufgebracht wird. Bei starker Beschleunigung hebt sich der Fahrer selbst aus dem Sattel und steht auf den Pedalen. Er hält sich dabei mit den Armen am Lenker fest, teils um überhaupt die Balance halten zu können, teils aber auch um die Kräfte, die ihn aus den Sattel heben, teilweise in den Lenker abzuleiten. Die Arme sind also an dem Antriebsvorgang beteiligt und dienen nicht ausschließlich zum Lenken des Fahrrades.

Wenn ein Fahrer entspannt fahren will, richtet er sich aus der normalen Fahrhaltung auf und fährt nur mit einer Hand oder gar freihändig, was allerdings eine erhebliche Übung erfordert. Die normale Fahrhaltung ist jedoch eine Zwangshaltung, die von jeder normalen Haltung abweicht und ein weiteres Unsicherheitsmoment darstellt.

Es sind nun auch bereits Fahrräder bekannt, bei denen versucht worden ist, die hohe Sitzposition und die dadurch sich einstellende Unsicherheit durch Verkleinerung der Räder zu mildern. Diese Lösung geht aber mit schwerwiegenden Nachteilen einher. Die kleineren Räder führen zu einer wesentlich schlechteren Straßenlage des Fahrzeugs, insofern sie eine schlechtere Kletterfähigkeit über Unebenheiten aufweist, in jedes Straßenloch "hineinfallen" und so eine unruhige, stoßreiche Fahrt bedeuten. Wesentlich ist aber auch, daß die kleineren Räder ein wesentlich verringertes Trägheitsmoment um ihre Achse aufweisen und dadurch die stabilisierende Kreiselwirkung kaum eintritt, die bei schnellere Fahrt auch bei einem Fahrrad schon eine Rolle spielt.

Aus der DE-OS 3o 2o 937 ist ein Versuch bekannt, ein Fahrrad dadurch mit einer niedrigeren Sitzposition zu versehen, daß der Sitz vor das Hinterrad und mit seiner Oberfläche tiefer als dieses gesetzt wird. Da die Länge des Fahrrades aus Gründen einer für das Balancieren, insbesondere bei niedrigen Geschwindigkeiten unerläßlichen Kurvengängigkeit, nicht über eine gewisse Grenze ausgedehnt werden kann und somit das Tretlager relativ nahe am Sitz angeordnet ist, führt die bekannte Konstruktion zu einer Fahrhaltung, bei welcher die Oberschenkel nach vorn und oben weisen und die Unterschenkel beim Treten immer angewinkelt sind. Dies ist eine ergonomisch sehr
ungünstige Haltung. Auch führt die extrem niedrige Sitzposition dazu, daß das Fahrzeug nicht mehr als verkehrssicher angesehen werden kann, weil ein Radfahrer zwischen
Kraftfahrzeugen leicht übersehen wird.

Eine ähnlich ungünstige Fahrhaltung ergibt sich bei
dem sogenannten "Batavus"-Rad (siehe Zeitschrift "Sport
und Freizeit-Tour" (1983), Heft 11, Seite 18), bei welchem
der Fahrer zwar nicht so tief sitzt, doch wegen der dortigen Rahmenkonstruktion das Tretlager erheblich oberhalb der Nabenhöhe gelegen ist, so daß die Oberschenkel
wieder nach oben weisen, die Unterschenkel ständig sehr
angewinkelt sind und der ganze Körper stark eingeknickt
ist.

Der Erfindung liegt die Aufgabe zugrunde, ein Fahrrad, welches im Hinblick auf das Vorhandensein eines vom
Sitz zum Tretlager führenden Rahmenrohrs, im Hinblick auf
ein tief und zwischen den Rädern etwa in Höhe deren
Naben gelegenes Tretlager und im Hinblick auf das Vorhandensein normal großer Räder als dem klassischen Typ
zugehörig zu bezeichnen ist, dahingehend auszugestalten,
daß beim Fahrer eine weniger ungewöhnliche Sitzhaltung
eingenommen und die Ursachen für das Unsicherheitsgefühl beim Start und bei langsamer Fahrt behoben sind.

Diese Aufgabe wird erfindungsgemäß durch die im
Kennzeichen des Anspruchs 1 wiedergegebenen Merkmale gelöst.

Ein besonders wichtiger Punkt ist die ziemlich
flache Stellung des Hauptrahmenrohrs. Sie bedeutet, daß
das Tretlager nicht im wesentlichen unter, sondern erheblich vor dem Sitz gelegen ist. Dadurch, daß gleichzeitig der Sitz jedoch nicht vor und unter dem oberen
Scheitel des Hinterrades angeordnet ist, (wie bei der
DE-OS 3o 2o 937) ergibt sich eine Vergrößerung der
Strecke vom Sitz bis zur Tretkurbel, die eine Betätigung derselben mit fast ausgestreckten Beinen erlaubt. Die
Beine verlaufen dabei nicht im wesentlichen nach unten,
wie beim klassischen Fahrrad und auch nicht fast horizontal wie bei den sogenannten Liegefahrrädern, sondern
in einer schräg nach vorn und unten sich erstreckenden
Gesamtausrichtung, die einer sehr natürlichen Sitzposition entspricht, etwa derjenigen, die eine Person
beim Sitzen mit ausgestreckten Beinen auf einem Sessel
einnimmt.

Die Gegenkräfte zu den Tretkräften werden nicht mehr
durch das Gewicht des Fahrers und zum Teil bei starker
Beanspruchung durch Festhalten mit den Armen am Lenker
aufgebracht, sondern durch Abstützung an der Rückenlehne. Der Sitz mit der Rückenlehne, das Hauptrahmenrohr
und die Tretkurbel bilden somit ein in sich geschlossenes
Kraftsystem für den Antrieb des Fahrrades. Die Arme sind
an der Krafterzeugung für den Vortrieb ganz wesentlich
weniger beteiligt und haben überwiegend nur noch die
Funktion des Lenkens inne. Der Oberkörper ist im wesentlichen aufrecht angeordnet, weil es nicht mehr erforderlich ist, daß die Arme zur Erzeugung eventueller Gegenkräfte nach unten reichen. Sie können vielmehr in einer
entspannten Normalhaltung nach vorn geführt werden. Die
Lenkstange ist entsprechend hochgeführt.

Der Sitz befindet sich ganz dicht über dem oberen
Scheitel des Hinterrades. Seine Höhe ist nicht mehr
durch die Beinlänge bestimmt, sondern es kann die Beinlänge nach vorn, d.h. mit einer wesentlichen horizontalen
Komponente untergebracht werden. Das führt dazu, daß der
auf dem Sitz sitzende Fahrer ohne jede Anstrengung mit
beiden Beinen den Boden erreichen kann und sicher steht
sowie bei langsamer Fahrt durch das Bewußtsein des jederzeit erreichbaren Bodenkontaktes eine erheblich größere
Sicherheit gewinnt. Der Bodenkontakt kann auch aufrechterhalten werden, bis eine gewisse Mindestgeschwindigkeit erreicht ist, wodurch wackelnde Anfahrvorgänge ausbleiben.

Zur Anpassung an verschiedene Beinlängen kann die Lage des Sitzes relativ zum Tretlager gemäß Anspruch 2 veränderbar sein. Wegen der flachen Lage des Hauptrahmenrohrs jedoch geht eine derartige Lageveränderung mit nur einer relativ geringen Höhenveränderung des Sitzes einher. Die ein Aufstehen mit beiden Füßen auf dem Boden ermöglichende Sitzhöhe wird dabei nicht verlassen.

Die Rückenlehne soll im wesentlichen zwar aufrechtstehen, um das beste Widerlager gegen die Tretkräfte zu bilden. Zur Anpassung an unterschiedliche anatomische Gegebenheiten der einzelnen Fahrer können sie jedoch in einem Winkel von plus/minus 15° zur Vertikalen verstellbar sein (Anspruch 3).

Eine im Hinblick auf die Unterbringung unterschiedlicher Beinlängen besonders wirksamer Verstellart ergibt sich durch die Schienenführung nach Anspruch 4.

Die Ausgestaltung nach Anspruch 5 führt zu einer überlagerten Verstellung des Sitzes.

Die Schienenführung kann in einer vorteilhaften Ausführungsform gemäß Anspruch 6 ausgebildet und an dem Rahmen angeordnet sein.

Eine zweckmäßige Ausbildung der Verbindung zum Halterohr ist in den Ansprüchen 7 bzw. 8 wiedergegeben.

Aus Gründen der vereinfachten Fertigung kann der Bügel gemäß Anspruch 9 bei seinem Rohrabschnitt einstückig gebogen sein.

Der Sitz muß in der Lage sein, die unter Umständen erheblichen Gegenkräfte zu den Tretkräften abzufangen, und muß dennoch an dem Bügel verstellbar angebracht werden können. Diese Forderungen werden durch die Ausbildung des Sitzes nach den Ansprüchen 1o bis 11 erfüllt.

Die Festlegung des Sitzes in der Schienenführung, die ja auch erhebliche Kräfte übertragen können muß, kann einfach und wirkungsvoll in der in Anspruch 12 wiedergegebenen Weise realisiert werden.

Der Sitz ist kein eigentlicher Sattel mehr, weil die Beine nicht seitlich vom Sitz nach unten führen, sondern vom Sitz nach vorn sich erstrecken.

Der Sitz hat also mehr eine Sesselfunktion und kann vorteilhaft in der in Anspruch 13 wiedergegebenen Weise ausgeführt sein. Die Sitzschale wird aus Blech oder einem harten Kunststoffmaterial hergestellt und ist anatomisch geformt.

Anstatt den Sitz aus Sitzrahmen und Sitzschale herzustellen kommt auch in Betracht, ihn in seinen wesentlichen Teilen einstückig als integrales Formteil aus Kunststoff oder Aluminium auszuführen (Anspruch 14).

Wichtige Merkmale für die ergonomisch richtige Ausgestaltung der Fahrhaltung sind in den Ansprüchen 14 bis 17 wiedergegeben.

Die Sitzfläche und die Rückenlehne sollen einen eher geringfügig über einem rechten Winkel gelegenen Winkel zueinander einnmehmen, so daß bei aufrechter Rückenlehne die Sitzfläche meist etwas nach vorn und unten geneigt ist. Außerdem soll die Sitzfläche mit einer angegebenen Bemessung von etwa 15o bis 25o mm recht kurz sein und darüber hinaus an der Vorderkante noch von der Mitte aus nach hinten abgeschrägt sein.

Diese Merkmale wirken dahin zusammen, daß der Oberschenkel beim Treten an seiner Unterseite durch den Sitz nicht behindert wird, sondern sich ganz frei bewegen kann. Die Funktion des erfindungsgemäßen Sitzes beruht weniger im Abfangen des Fahrergewichtes durch bloße Auflage auf der Sitzfläche, als vielmehr in dem Widerlager gegen die Tretkräfte. Es zählt mehr der Anpreßdruck an der Rückenlehne, durch welchen ein Teil des Gewichtes schon durch die Reibung an der Rückenlehne abgefangen wird.

Dazu trägt auch bei, daß die Rückenlehne relativ hoch ausgebildet ist, jedenfalls deutlich höher als die Länge der Sitzfläche, insbesondere etwa 1,5 bis 2 mal so hoch wie die Sitzfläche (Anspruch 18).

Mittels der aufblasbaren Polster nach Anspruch 19, kann eine gewisse Anpassung an das Fahrergewicht erfolgen und ergibt sich insgesamt ein komfortableres Sitzen.

Der Rahmen kann im einzelnen in der in Anspruch 2o wiedergegebenen Weise ausgeführt sein.

Ein muffenloser Rahmen mit einem Teil dieser Merkmale ist aus der DE-OS 31 43 265 bekannt. Allerdings fehlt hierbei das vom Sitz zum Tretlager durchgehende Hauptrahmenrohr und sind die Teilrahmen vollständig endlos ausgeführt, also auch im Bereich des Gabelkopfes.

Es empfiehlt sich zur Vereinfachung der Fertigung, daß alle vorkommenden Biegeradien am Rahmen selbst und/ oder an dem Sitz tragenden Bügel gleichgroß sind (Anspruch 21).

Damit auf einfache Weise der Lenker in bequeme Griffweite der Arme gerückt werden kann, empfiehlt sich eine etwas stärkere Neigung des Gabelkopfes, als sie normalerweise anzutreffen ist (Anspruch 22).

Gemäß Anspruch 23 ist eine bequeme Griffweite dann gegeben, wenn die Lenkergriffe sich etwa über dem Tretlager und etwa 25o mm bis 4oo mm über der Sitzfläche befinden.

Der Fahrkomfort kann durch Federungen nach Anspruch 24 gewünschtenfalls noch erhöht werden.

Auch vorstehend nicht erwähnte und sich aus der Zeichnung und/oder der Beschreibung ergebende Merkmale des Fahrrades sind erfindungswesentlich.

In der Zeichnung ist ein Ausführungsbeispiel der Erfindung dargestellt.

Fig. 1 ist eine Seitenansicht eines erfindungsgemäßen Fahrrades;

Fig. 2 ist eine perspektivische Teilansicht schräg von vorn und unten des Sitzrahmens;

Fig. 3 ist eine Teilansicht von hinten gegen den Sitz;

Fig. 4 bis 6 sind Teilansichten von der Seite, die den Sitz in verschiedenen Verstellpositionen wiedergeben;

Fig. 7 ist eine perspektivische Teilansicht von schräg vorn und oben des Sitzes;

Fig. 8 läßt die Fahrhaltung erkennen.

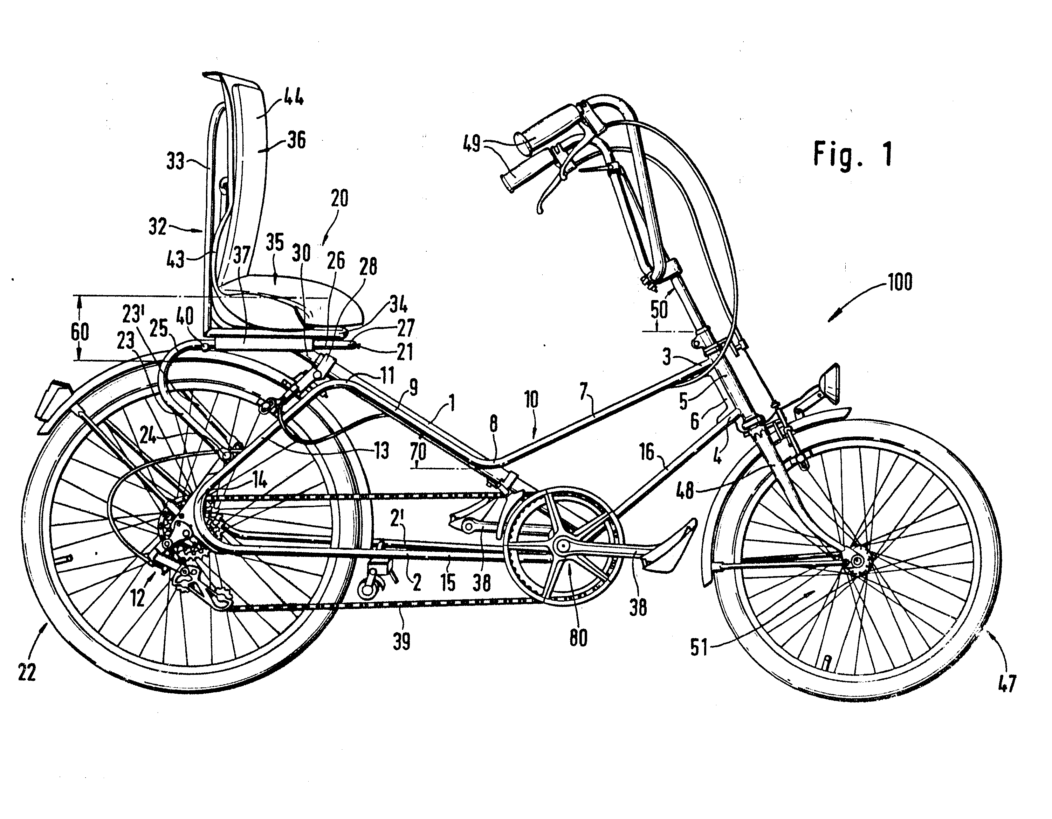

Das in Fig. 1 als Ganzes mit 1oo bezeichnete Fahrrad besitzt einen im wesentlichen sich in einer Ebene erstreckenden Rahmen 1o, der ein durchgehendes gerades, vom Sitz 2o zum Tretlager 8o verlaufendes Hauptrahmenrohr 1, sowie zu beiden Seiten desselben angeordnete Teilrahmen 2,2' umfaßt, die untereinander gleich ausgebildet sind. Die Teilrahmen bestehen aus einem im hinteren Bereich endlos gebogenen Stahlrohr, welches vorne mit seinen Enden 3,4 am oberen bzw. unteren Ende des durch einen Rohrabschnitt gebildeten Gabellagers 5 befestigt sind, wobei die Verbindung durch ein eingesetztes Verstärkungsblech 6 stabilisiert ist.

Von dem oberen Ende 3 ausgehend, verläuft der Teilrahmen 2 zunächst in einem geradlinigen Schenkel 7 nach unten und geht dann in einem Bogen 8 in einen geradlinig nach oben verlaufenden Schenkel 9 über, der parallel zum Hauptrahmenrohr 1 verläuft, seitlich an diesem anliegt und mit diesem verbunden ist. Die Schenkel 7,9 bilden den oberen Rahmenholm, der nach unten V-förmig eingeknickt ist (Fig.1), wobei die Schenkel 7,9 einen Winkel von etwa 120° und der Bogen 8 den Scheitel des "V" bildet. Der Bogen 8 befindet sich, vom oberen Ende des Hauptrahmenrohrs 1 an gerechnet, bei etwa 3/5 dessen Länge.

In der Nähe des oberen Endes des Rahmenrohrs geht der Schenkel 9 in einem Bogen 11 in eine gerade, unter 45° schräg nach hinten und unten bis zur Hinterradnabe 12 sich erstreckende Strebe 13 über, die in einem Bogen 14 in eine geradlinig etwa horizontal nach vorn bis zum Tretlager 8o verlaufende Strebe 15 über. Unterhalb des Tretlagers vollzieht die Strebe 15 einen in Fig. 1 nicht sichtbaren Bogen und geht unter 135°
in einen geraden, schräg nach vorn und oben verlaufenden Rahmenholm
16 über, der das am Gabellager 5 sitzende Ende 4 aufweist. Die Radien
aller Bogen betragen ca. 60 mm.

Wenn die Teilrahmen 2,2' von dem Bogen 11 bis zu dem oberen
Ende 3 gerade durchgingen, entspräche die Gesamtstruktur einem Fünfeckrahmen. Aufgrund der tatäschlich vorhandenen zusätzlichen einspringenden Ecke an dem Bogen 8 könnte man den Rahmen gewissermaßen
als Sechseckrahmen bezeich

Das Hauptrahmenrohr 1 verläuft oberhalb des Tretlagers 8o und
greift zwischen die Rahmenholme 16 ein. Es ist ebenso wie die Rahmenholme 15,16 mit dem Tretlager verschweißt bzw. verlötet.

Der Sitz 2o ist auf einer Abstützung befestigt, die
durch einen einstückig aus einem Rohrabschnitt gebildeten Bügel 21 besteht. Der Bügel 21 ist in der zur
Rahmen- bzw. Zeichenebene parallelen Ebene V-förmig gebogen und weist zu beiden Seiten des Hinterrades 22 sich
erstreckende gerade Schenkel 23,23' auf, die an ihren
vorderen Enden mit Schrauben 24 schwenkbar an den Streben
13 etwa in deren Mitte angebracht sind. Die Schenkel 23,
23' verlaufen etwa unter 45° schräg nach hinten und oben
und gehen in einem Bogen 25 in im wesentlichen horizontal
nach vorn verlaufende Schenkel 26 über, die an der Vorderseite durch einen in einer horizontalen Ebene verlaufenden Verbindungsbogen 27 miteinander verbunden sind. Die
Schenkel 23,26 bilden in einer zur Rahmenebene parallelen
Ebene einen Winkel von etwa 45° miteinander.

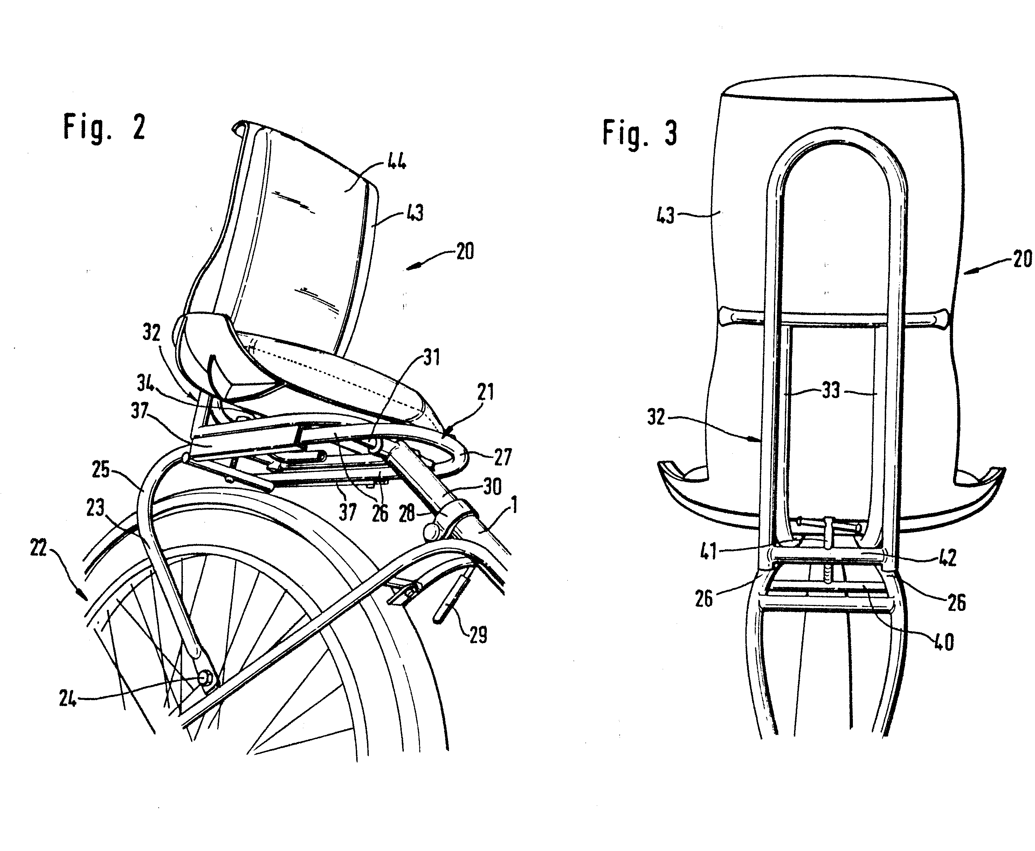

Das Hauptrahmenrohr 1 endet etwa in Höhe des oberen
Scheitels des Hinterrades 22 in einer Klemmmuffe 28, die
durch eine Klemmschraube 29 betätigbar ist und zur Festsetzung eines bei gelöster Klemmschraube 29 in dem Hauptrahmenrohr teleskopartig verschiebbaren Halterohrs 3o
dient. Am oberen Ende des Halterohrs 3o ist ein Querzapfen 31 (Fig. 2) angebracht, der mit seinen Enden an
den vorderen Enden der Schenkel 26 angreift. Je nach dem
wie weit das Halterohr 3o aus dem Hauptrahmenrohr 1 ausgefahren oder in dieses eingeschoben wird, kippt der
Bügel 21 um die durch die Lage der Schrauben 24 gegebene
Achse und kann in den verschiedenen Kippstellungen durch Anziehen der Klemmschrauben 29 festgesetzt werden.

Die Schenkel 26 des Bügels 21 bilden eine Schienenführung für den Sitz 2o. Dieser umfaßt einen Sitzrahmen
32, der aus zwei einen Winkel von etwa 9o° in der Rahmenebene zueinander einnehmenden Rahmenteilen 33,34 besteht.
Der Rahmenteil 34 unterstützt die Sitzfläche 35, der
Rahmenteil 33 die Rückenlehne 36. Die Rahmenteile 33,34
bestehen ihrerseits aus Rohrmaterial. Sie sind gegen Aufbiegen des rechten Winkels zusätzlich ausgesteift, so daß
die Rückenlehne 36 das gewünschte Widerlager gegen die
Tretkräfte bilden kann.

Der die Sitzfläche 35 unterstützende Rahmenteil 34
liegt auf den Schenkeln 26 des Bügels 21 auf und untergreift diese mit an ihm befestigte, außen an den Schenkeln
26 vorbeigeführten Winkelstücken 37, die den Rahmenteil
34 und damit den Sitz 2o an dem Bügel derart führen, daß
nur eine Verlagerung in Längsrichtung des Fahrrades 1oo
möglich ist. Damit der Sitz 2o nicht unter den Tretkräften
von selbst nach hinten rutscht, ist er an dem Bügel 21
mittels eines in Querrichtung desselben sich erstreckenden,
mit seinen Enden die Schenkel 26 untergreifenden Klemmstücks 4o an dem Bügel 21 festlegbar, welches durch eine
Spannschraube 41 (Fig. 3) von unten gegen die Schenkel
26 ziehbar ist, die ein Querstück 42 im Verbindungsbereich der Rahmenteile 33,34 durchgreift und sich auf
diesem abstützt.

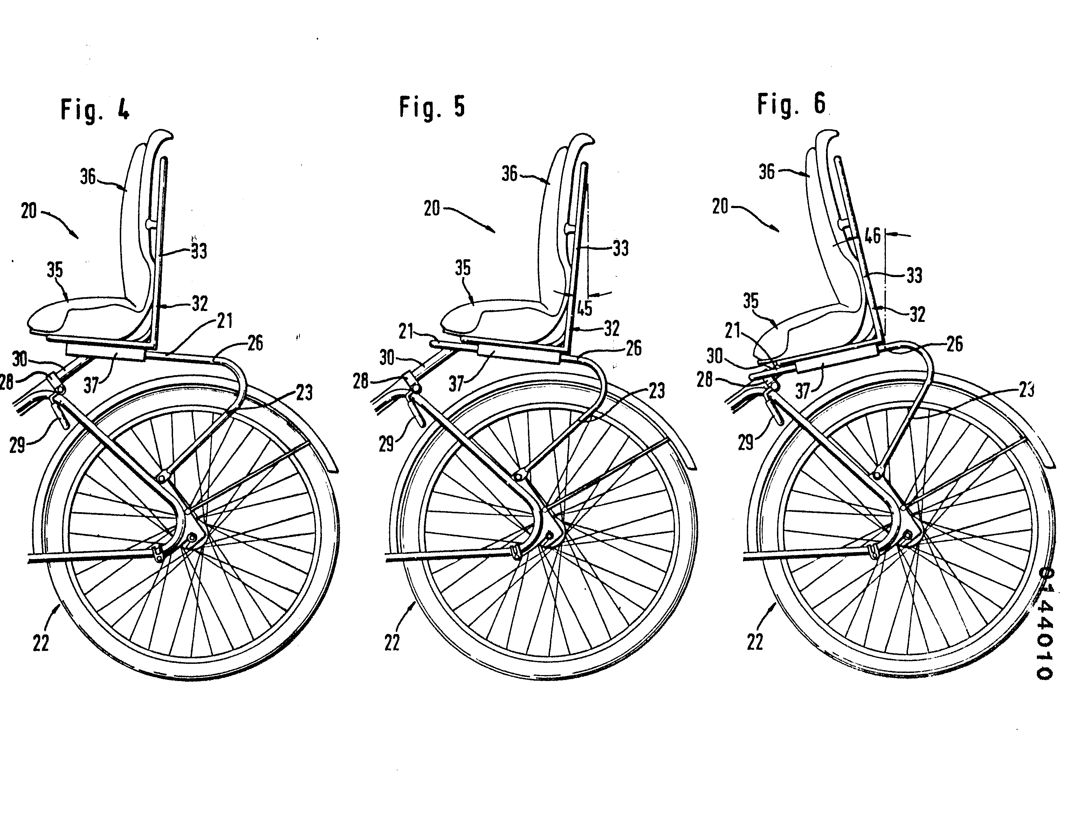

Durch Betätigung der Klemmschraube 29 kann also der
Bügel 21 und damit die Schienenführung des Sitzes 2o insgesamt nach hinten und oben und außerdem der Sitzrahmen
32 an dem Bügel 21 in im wesentlichen horizontaler Richtung verstellt werden. Bei verschiedenen Auszugspositionen des Halterohrs 3o ergibt sich auch eine gewisse
Beeinflussung der Winkellage der Rücklehne 36, wie anhand der Fig. 4 bis 6 noch erläutert werden wird.

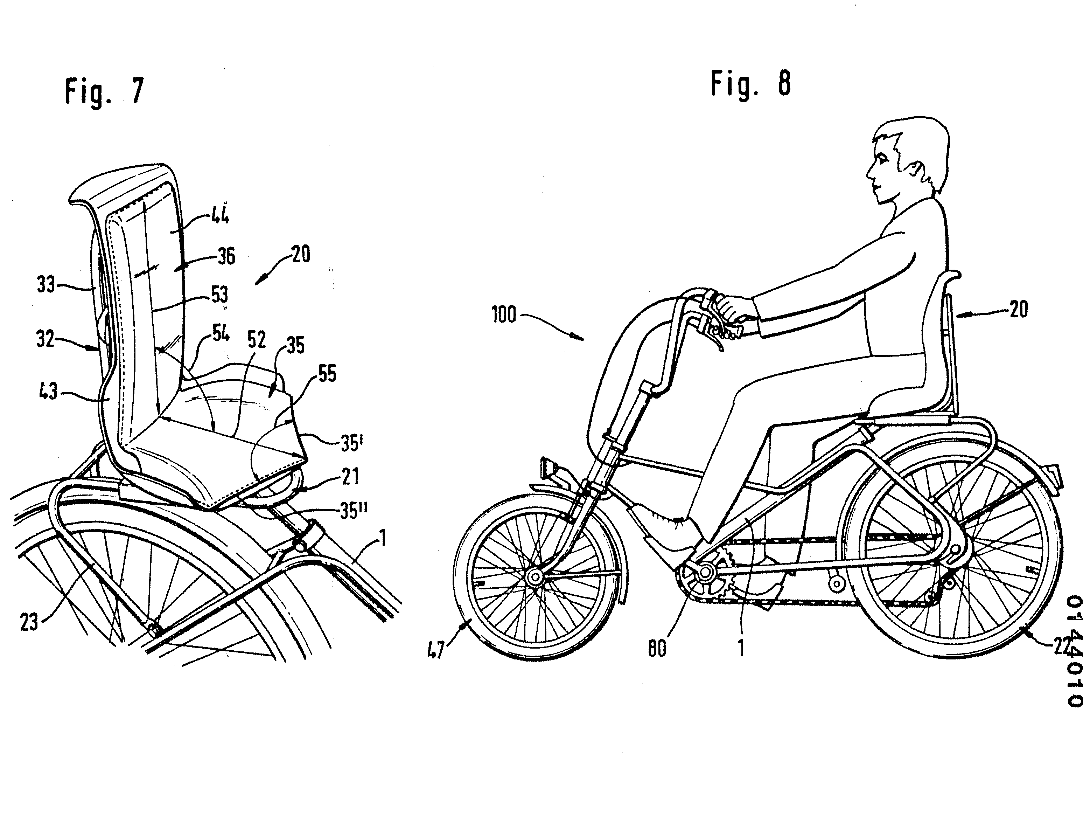

Wie sich am besten aus Fig. 7 erkennen läßt, ist auf

dem Sitzrahmen 32 eine aus hartem Kunststoff oder Blech geformte Sitzschale 43 angebracht, die auf der Vorderseite eine Polsterung 44 trägt. Der Sitz 2o könnte auch durch einen Integralschaumkörper gebildet sein, der auf der Rückseite formsteif und auf der Vorderseite weich ist. Auch ist es möglich, statt der gezeigten Ausführungsform mit separatem Sitzrahmen die Rückenlehne 36, die Sitzfläche 35 und den Winkelstücken 37 entsprechende Führungselemente einstückig aus einem Formteil aus Kunststoff oder einer Aluminiumlegierung zu bilden. Die Polsterung 44 kann in einen solchen Sitz integriert und auch, ob integriert oder nicht, aufblasbar sein.

Aus Fig. 7 gehen auch noch wichtige weitere Gestaltungsmerkmale des Sitzes 2o hervor. Die Sitzfläche 35 ist von ihrer vordersten Stelle in der Mitte bis zum Schnittpunkt mit der Auflagefläche der Rückenlehne 36 relativ kurz und hat nur eine Länge 52 von etwa 2oo mm. Die Rückenlehne 36 ist indessen relativ hoch und hat in dem Ausführungsbeispiel eine Höhe 53 von etwa 35o mm. Maßgebend sind dabei die zur Anlage kommenden Teile der Sitzfläche 35 bzw. der Rückenlehne 36, nicht die Stützkonstruktion. Diese Teile bilden außerdem einen bei 54 angedeuteten Winkel von etwa 95° miteinander, so daß bei aufrechter Rückenlehne 36 die Sitzfläche 35 etwas nach vorne abfällt. Schließlich ist die Sitzfläche 35 von der vordersten Stelle aus nach beiden Seiten hin nach hinten abgeschrägt, so daß die Vorderkanten 35',35'' einen Winkel von etwa 12o° miteinander einschließen. Die Breite des Sitzes entspricht der Gesäßbreite und liegt in dem Ausführungsbeispiel bei etwa 25o mm. Sowohl die Sitzfläche 35 als auch die Rückenlehne 36 sind im unbelasteten Zustand in erster Näherung im wesentlichen eben, passen sich aber unter Belastung durch ihre Nachgiebigkeit der Körperform an. Die Kürze der Sitzfläche 35 im Verein mit ihren nach außen zurückweichenden Vorderkanten 35',35''

führen dazu, daß der Oberschenkel beim Treten an seiner
Unterseite durch die Sitzfläche 35 nicht behindert wird.

Der Antrieb des Hinterrades 22 erfolgt in der
üblichen Weise über die Tretkurbeln 38 und eine Kette 39.
Auch das Vorderrad 47 ist konventionell in einer Gabel
48 in dem Gabellager 5 gelagert. Die Lenkergriffe 49
sind etwa über dem Tretlager 8o angebracht, was unter
anderem durch eine ziemlich starke Schrägstellung des
Gabellagers 5 erreicht wird. Die Lenkachse nimmt einen
Winkel 5o zur Horizontalen von 62° ein. Der Lenker ist
hochgezogen, so daß sich die Lenkergriffe in dem Ausführungsbeispiel etwa 3oo mm oberhalb der Sitzfläche 35
befinden, wenn diese unter dem Gewicht des Fahrers auf
ihre Betriebshöhe zusammengedrückt ist.

In den Fig. 4 bis 6 ist die Sitzverstellung erläutert.

In Fig. 4 ist das Halterohr 3o in einer mittleren
Ausziehstellung wiedergegeben, die dazu führt, daß der
eine Ebene bildende Rahmenteil 33 fast vertikal steht.
Da die Sitzlehne 36 etwa parallel zu dem Rahmenteil 33
verläuft, kann die Stellung des Rahmenteils 33 zur Beschreibung der Stellung der Sitzlehne 36 herangezogen
werden.

In Fig. 4 ist der Sitzrahmen 32 auf den nach vorn
weisenden Schenkeln 26 des Bügels 21 soweit wie möglich
nach vorne gerückt, wie es für Fahrer mit relativ kurzen
Beinen zwe mäßig ist.

In Fig. Fig. 5 befindet sich der Sitzrahmen 32 mit
den Winkelstücken 37 in einer mittleren Verschiebungslage längs der Schenkel 26 des Bügels 21.

Der Rahmenteil 33 ist gegenüber der Vertikalen um einen Winkel 45 nach hinten geneigt. Das Halterohr 3o ist dabei weiter ausgezogen als in Fig. 4. In Fig. 6 hingegen ist das Halterohr 3o fast ganz eingeschoben, wodurch sich eine um einen Winkel 46 leicht nach vorn geneigte Stellung der Rückenlehne 36 bzw. des Rahmenteils 33 ergibt. Die Konstruktion ist so getroffen, daß Verlagerungswinkel 45, 45 von je etwa maximal 15° möglich sind.

Durch die Einstellung des Bügels 21 und des Sitzes 2o nach den Fig. 4 bis 6 ergibt sich nicht nur eine Veränderung der Stellung der Rückenlehne 36 sondern auch ein nicht unerheblicher Einfluß im Hinblick auf den Abstand zum Tretlager 8o. Die Gesamteinstellung erfolgt durch eine kombinierte Justierung der Winkellage des Bügels 21 und der Lage des Sitzrahmens 32 längs derselben.

Das Hauptrahmenrohr 1 endet etwa in Höhe des oberen Scheitels des Hinterrades 22 und es erstrecken sich die Schenkel 26 des Bügels 21 nur wenige Zentimeter oberhalb dieses Scheitels. Die Anordnung ist so getroffen, daß bei auf dem Sitz 2o sitzendem Fahrer und entsprechend zusammengedrückter Sitzfläche der vertikale Abstand 6o zwischen deren tiefstem Punkt und dem Scheitel des Hinterrades 22 nicht mehr als 1oo mm beträgt. Die Sitzfläche 35 befindet sich also ziemlich dicht oberhalb des oberen Scheitels des Hinterrades 22. Die Gesamthöhe der Sitzfläche 35 über dem Boden beträgt also bei normaler Größe des Hinterrades 22 maximal etwa 75o mm, so daß der Fahrer bequem mit beiden Beinen noch den Boden erreichen kann.

Das Hauptrahmenrohr 1 ist, wie aus Fig. 1 ersichtlich, sehr flach nach vorne geführt und nimmt mit der Horizontalen einen Winkel 7o ein, der in dem Ausführungsbeispiel 32° beträgt. Um die Tretkurbeln 38 bei der entferntesten Stellung der Pedale mit fast ausgestreckten Beinen betätigen zu können, liegt die Tretkurbel, deren Tretlager 8o sich etwa in Höhe der Hinterradnabe 12 bzw.

der Vorderradnabe 51 befindet, ziemlich weit vorn mit
einem Abstand vor dem Hinterrad, der noch etwas größer
ist als der Radius des Hinterrades. Das Bein erstreckt
sich also schräg nach vorn und unten, wobei als Folge
der Anordnung der Sitzfläche oberhalb des Hinterrades 22
und der weit nach vorn gezogenen Lage des Tretlagers 8o
beim Fahrer die Oberschenkel normalerweise nicht über
die Horizontale hinauskommen und die Beine weitgehend
gestreckt verbleiben.

Die Sitzhaltung ist in Fig. 8 wiedergegeben, worin
auch noch deutlich zu sehen ist, daß der Oberkörper beim
Fahren fast aufrecht verbleibt. Die Sitzhaltung entspricht einer entspannten Sitzhaltung mit ausgestreckten
Beinen auf einem Sessel oder einer ähnlichen Sitzgelegenheit. Der Erdboden kann mit beiden Beinen und voll
aufstehenden Füßen jederzeit erreicht werden. Dies gelingt dadurch, daß die durch das Hauptrahmenrohr 1 gegebene Verbindungslinie vom Sitz 2o zum Tretlager 8o
schräg, d.h. in einem flachen Winkel zur Horizontalen
und nicht wie beim klassischen Fahrrad im wesentlichen
aufrecht verläuft. Dadurch kann der Sitz 2o relativ
niedrig und dicht über dem Hinterrad 22 angeordnet
werden. Dabei ist der Sitz 2o aber nicht zu niedrig, so
daß der Fahrer noch eine gewisse Höhe hat, um im Verkehr
den Überblick zu behalten und auch selbst erkannt zu
werden. Das Hinterrad 22 hat einen normalen Durchmesser
in der Größenordnung von etwa 6oo mm, wobei dieses Maß
um etwa 1o% nach oben oder unten schwanken kann, je nach
dem ob es sich um ein Jugendrad oder ein Erwachsenenrad
handelt. Das Vorderrad 47 ist etwas kleiner als das
Hinterrad 22, damit die sich aus Fig. 1 ergebenden
Proportionen eingehalten werden können und der dicht
über dem Vorderrad 47 liegende Gabelkopf 5 und der
Rahmenholm 7 so niedrig liegen, daß ein bequemes und gefahrloses Auf- und Absteigen möglich ist. Der Durchmesser des Vorderrades 47 liegt in dem Ausführungsbeispiel bei
etwa 82% des Durchmessers des Hinterrades 22 und kann
sich etwa im Bereich von 7o bis 85% dieses Durchmessers
bewegen.

Newpro, Regina BAUMANN
in 4ooo Düsseldorf 1.


Patentansprüche.


1. Fahrrad

mit einem im wesentlichen in einer Ebene verlaufenden
Rahmen in Strebbauweise;

mit zwei Rädern, von denen das im Rahmen fest gelagerte
Hinterrad 55o mm bis 7oo mm Außendurchmesser aufweist und
von denen das Vorderrad in einer Gabel gelagert ist, die
in einem Gabellager am Rahmen schwenkbar angeordnet ist,
und 65% bis 75% des Außendurchmessers des Hinterrades aufweist;

mit einem Tretlager zur Lagerung einer Tretkurbel zum
Antrieb des Hinterrades, die zwischen den Rädern etwa in
der Höhe der Radnaben angeordnet ist;

mit einem auf einer Abstützung befestigten Sitz, der
oberhalb des Hinterrades angeordnet ist

und mit einem von der Abstützung des Sitzes zum Tretlager schräg nach vorn und unten verlaufenden geraden
Hauptrahmenrohr,

dadurch gekennzeichnet,

daß der Sitz (2o) mit der im Betrieb tiefsten Stelle
seiner Oberseite nicht mehr als 1oo mm oberhalb des oberen Scheitels des Hinterrades (22) gelegen ist,

daß der Sitz (2o) eine im wesentlichen aufrechte Rückenlehne (36) aufweist

und daß das Hauptrahmenrohr (1) unter einem Winkel
von 32 ± 5° zur Horizontalen verläuft.

2. Fahrrad nach Anspruch 1, dadurch gekennzeichnet,
daß die Lage des Sitzes (2o) relativ zum Tretlager (8o)
in Längsrichtung des Hauptrahmenrohrs (1) verstellbar
ist.

3. Fahrrad nach Anspruch 1 oder 2, dadurch gekennzeichnet, daß die Rückenlehne (36) ihrem oberen Bereich
nach vorn und/oder hinten verlagerbar ist, so daß sie
mit der Vertikalen einen Winkel von maximal 15° einschließt.

4. Fahrrad nach einem der Ansprüche 1 bis 3, dadurch gekennzeichnet, daß der Sitz (2o) an einer im
wesentlichen horizontalen Schienenführung (26,37) verstellbar ist.

5. Fahrrad nach Anspruch 4, dadurch gekennzeichnet,
daß die Schienenführung (26,37) ihrerseits an einem teleskopartig in dem Hauptrahmenrohr (1) verschiebbaren und
festlegbaren Halterohr (3o) verlagerbar ist.

6. Fahrrad nach Anspruch 4 oder 5, dadurch gekennzeichnet, daß die Schienenführung unter anderem durch
den nach vorn weisenden einen Schenkel (26) eines senkrecht zur Rahmenebene gesehen im wesentlichen V-förmigen
Bügels (21) gebildet ist, der mit dem freien Ende des
anderen Schenkels (23) an einem hinteren Teil (13) des
Rahmens (1o) um eine senkrecht zur Rahmenebene verlaufende Achse (24) schwenkbar gelagert ist.

7. Fahrrad nach Anspruch 5 und 6, dadurch gekennzeichnet, daß das obere Ende des Halterohrs (3o) schwenkan dem nach vorn weisenden Schenkel (26) des Bügels (21)
angreift.

8. Fahrrad nach Anspruch 6 oder 7, dadurch gekennzeichnet, daß der Bügel (21) doppelt ausgebildet ist, die beiden vorderen Schenkel (26) unter dem vorderen Bereich des Sitzes (2o) miteinander verbunden sind und die beiden anderen Schenkel (23,23') zu beiden Seiten des Hinterrades (22) verlaufen.

9. Fahrrad nach einem der Ansprüche 6 bis 8, dadurch gekennzeichnet, daß der Bügel (21) aus einem Rohrabschnitt einstückig gebogen ist.

1o. Fahrrad nach einem der Ansprüche 6 bis 9, dadurch gekennzeichnet, daß ein starrer Sitzrahmen (32) vorgesehen ist und daß der die Sitzfläche (35) abstützende Rahmenteil (34) auf den nach vorn weisenden Schenkeln des Bügels (21) aufliegt und an diesen mit Führungselementen angreift, die nur eine Längsverschiebung des Sitzes (2o) zulassen.

11. Fahrrad nach Anspruch 1o, dadurch gekennzeichnet, daß die Führungselemente mit dem die Sitzfläche (35) abstützenden Rahmenteil (34) des Sitzrahmens (32) verbundene, die nach vorn weisenden Schenkel (26) des Bügels (21) von oben umgreifende und untergreifende Winkelstücke (37) umfassen.

12. Fahrrad nach einem der Ansprüche 6 bis 11, dadurch gekennzeichnet, daß ein die nach vorn weisenden Schenkel (26) des Bügels (21) untergreifendes, senkrecht zur Rahmenebene sich erstreckendes Klemmstück (4o) vorgesehen ist, in welches eine am Sitzrahmen (32) angreifende Spannschraube (41) von oben eingreift.

13. Fahrrad nach einem der Ansprüche 1o bis 12, dadurch gekennzeichnet, daß auf dem Sitzrahmen (32) eine Schale (43) mit einer Polsterung (44) angebracht ist.

14. Fahrrad nach einem der Ansprüche 6 bis 9, dadurch gekennzeichnet, daß zumindest die tragenden Teile der Rückenlehne (36) und der Sitzfläche (35) sowie die an dem Bügel (21) angreifenden und nur eine Längsverschiebung des Sitzes (2o) zulassenden Führungselemente
einstückig ausgebildet sind.

15. Fahrrad nach einem der Ansprüche 1 bis 14, dadurch gekennzeichnet, daß die Rückenlehne (36) und die
Sitzfläche (35) einen Winkel von 9o-1oo° miteinander
bilden.

16. Fahrrad nach einem der Ansprüche 1 bis 15, dadurch gekennzeichnet, daß die Sitzfläche (35) in der
Mitte etwa 15o bis 25o mm lang ist.

17. Fahrrad nach Anspruch 16, dadurch gekennzeichnet,
daß die Vorderkante der Sitzfläche (35) zu den Seiten hin
nach hinten zurückweicht.

18. Fahrrad nach einem der Ansprüche 1 bis 17, dadurch gekennzeichnet, daß die Rückenlehne (36) etwa 1,5 bis
2 mal   so hoch wie die Sitzfläche (35) lang ist.

19. Fahrrad nach einem der Ansprüche 1 bis 18, dadurch gekennzeichnet, daß die Sitzfläche (35) und/oder
die Rückenlehne (36) durch ein oder mehrere aufblasbare
Polster gebildet sind.

2o. Fahrrad nach einem der Ansprüche 1 bis 19, dadurch gekennzeichnet, daß der Rahmen (1o) in seinem
hinteren Teil als muffenloser Rohrrahmen aus zwei aus
Rohrmaterial endlos gebogenen Teilrahmen (2,2') ausgebildet ist, die zu beiden Seiten des Hauptrahmenrohrs
(1) bzw. des Hinterrades (22) angeordnet sind, daß die
oberen Rahmenholme (7,9) V-förmig  nach unten derart eingeknickt sind, daß der eine Schenkel (9) eine Strecke
parallel zu dem Hauptrahmenrohr (1) verläuft und dort
mit diesem verbunden ist und daß die freien Enden (3,4)
des Rohrmaterials stumpf gegen das Gabellager (5) gesetzt und mit diesem verbunden sind.

21. Fahrrad nach Anspruch 9 und/oder 2o, dadurch gekennzeichnet, daß alle Biegeradien gleichgroß sind.

0144010

22. Fahrrad nach einem der Ansprüche 1 bis 21, dadurch gekennzeichnet, daß das Gabellager (5) um 62 ± 3° gegenüber der Horizontalen schräg nach vorn und unten geneigt ist.

23. Fahrrad nach einem der Ansprüche 1 bis 22, dadurch gekennzeichnet, daß die Lenkergriffe (49) sich etwa über dem Tretlager (8o) und etwa 25o bis 4oo mm über der Sitzfläche (35) befinden.

24. Fahrrad nach einem der Ansprüche 1 bis 23, dadurch gekennzeichnet, daß der Sitz (2o) und/oder die Räder (22,47) gefedert sind.

0144010

Fig. 1

Newpro, Regina Baumann

Fig. 2

44

43

20

32

31

34

21

37

27

25

30

23

1

22

28

26

37

29

24

Fig. 3

43

20

32

33

31

41

42

26

26

40

2 / 4

Fig. 4

Fig. 5

Fig. 6

3/4

0144010

# Fig. 7

# Fig. 8

4 / 4

01 44010